# EUROPÄISCHE PATENTSCHRIFT

(11) **EP 2 446 951 B1**
(45) Veröffentlichungstag und Bekanntmachung des Hinweises auf die Patenterteilung: **10.10.2012**
(21) Anmeldenummer: 10188860.0
(22) Anmeldetag: 26.10.2010
(51) Int. Cl.: B01D 29/15, B01D 35/147, B01D 35/153, F23K 5/14, F23K 5/16, B01D 29/88

(54) **Vorrichtung zum Filtern und Entlüften von Heizöl mit Rücklaufumschaltventil**
Device for filtering and removing air from heating oil with return flow valve
Dispositif de filtration et d'aération de fioul de chauffage à l'aide d'une soupape d'inversion du refoulement

(43) Veröffentlichungstag der Anmeldung: 02.05.2012
(73) Patentinhaber: AFRISO-EURO-INDEX GmbH, 74363 Güglingen (DE)
(72) Erfinder: Heinz, Thomas, 74374 Zaberfeld (DE); Mayer, Eugen, 74254 Offenan (DE)
(74) Vertreter: Kohler Schmid Möbus

(56) Entgegenhaltungen:
- DE-A1- 1 937 903
- DE-A1- 3 731 958
- DE-A1- 19 646 248
- DE-A1-102006 037 676
- DE-C1- 4 238 044

## Beschreibung

Die vorliegende Erfindung betrifft eine Vorrichtung zum Filtern von flüssigem Brennstoff, insbesondere von Heizöl, aufweisend einen Tankanschluss zum Anschließen an einen Brennstofftank, einen Vorlaufanschluss zum Anschließen an einen Brenner-Vorlauf, einen Rücklaufanschluss zum Anschließen an einen Brenner-Rücklauf, eine den Tankanschluss mit dem Vorlaufanschluss verbindende Vorlaufleitung, einen in der Vorlaufleitung angeordneten Brennstofffilter und eine den Rücklaufanschluss mit der Vorlaufleitung verbindende Rücklaufleitung.

Eine derartige Vorrichtung zum Filtern und auch zum Entlüften von Heizöl ist beispielsweise aus der DE 39 04 963 A1 bekannt worden.

Bei dieser bekannten und auch anderen am Markt befindlichen Filter- und Entlüftungsvorrichtungen ist der Heizölentlüfter dem Ölfilter nachgeschaltet. Auch bei Kombinationsgeräten erfolgt nur die Filterung des vom Tank angezogenen Heizöls bzw. des flüssigen Brennstoffs, d.h., die Filterung des flüssigen Brennstoffes erfolgt im Vorlauf. Gegenüber dem klassischen Zweistrangfilter kommt es bei Anlagen, die im Einstrang betrieben werden, zu vermehrten Problemen mit Luftansammlungen an der Außenseite des Filterelementes. Da im Einstrangbetrieb nur der tatsächliche Brennerverbrauch durch das Filterelement gezogen wird, sinkt der Volumenstrom entsprechend ab. Es ist dabei nur noch eine geringfügige Druckdifferenz zwischen Außen- und Innenseite des Filterelements vorhanden. Aufgrund der vollständig mit Brennstoff benetzten Oberfläche des Filterelements ist es den Luftblasen nicht mehr möglich, diesen Flüssigkeitsfilm zu durchdringen. Es kommt zwangsläufig zu größeren Luftansammlungen in der Filtertasse, die sich aber nur im Außenbereich des Filterelementes abspielen.

Auch aus DE 196 46 248 A1, DE 10 2006 037 676 A1, DE 37 31 958 A1, DE 42 38 044 C1 und DE 19 37 903 A1 ist ebenfalls eine Filtervorrichtung für Heizöl mit einem Vorlauf, mit einem Rücklauf und mit einer Entlüftungseinrichtung bekannt, wobei einige dieser Dokumente auch ein Rücklaufventil offenbaren, mit dessen Hilfe die Rücklaufmenge aus dem Ölaufnahmebehälter reguliert wird.

Demgegenüber ist es die Aufgabe der vorliegenden Erfindung, eine Filtervorrichtung der eingangs genannten Art weiter zu verbessern und insbesondere größere Luftansammlungen im Filterbereich zu verhindern.

Diese Aufgabe wird erfindungsgemäß dadurch gelöst, dass die Rücklaufleitung an die Vorlaufleitung durch ein zwischen zwei Ventilstellungen schaltbares Rücklaufumschaltventil angeschlossen ist, welches die Rücklaufleitung in der einen Ventilstellung stromaufwärts des Brennstofffilters und in der anderen Ventilstellung stromabwärts des Brennstofffilters mit der Vorlaufleitung verbindet.

Erfindungsgemäß verbindet das Rücklaufumschaltventil die Rücklaufleitung mit der Vorlaufleitung wahlweise stromabwärts des Brennstofffilters für eine Einmalfilterung des dem Brenner zuzuführenden Brennstoffs oder stromaufwärts des Brennstofffilters für eine Mehrfachfilterung des dem Brenner zuzuführenden Brennstoffs. Durch die Mehrfachfilterung ergeben sich somit insbesondere die folgenden Vorteile:
- Keine bzw. wesentlich geringere Luftansammlungen in der Filtertasse vor allem bei kleinen Volumenströmen.
- Wesentliche Verbesserung der Filterfeinheit bei kleinen Durchflüssen, da sich durch die Mehrfachfilterung zum Beispiel die Filterfeinheit eines 5/20 µm-Elementes (5 µm bei 50 % Fraktionsabscheidegrad / 20 µm bei 99 % Fraktionsabscheidegrad) von 20 µm auf 5 µm verbessert.
- Der Brennstofffilter lässt sich wahlweise auf größere bzw. kleinere Durchflüsse einstellen. Dadurch wird bei kleinen Verbrauchern eine optimale Filterung erreicht. Dies ist wichtig für den störungsfreien Betrieb bei Kleinstverbraucher mit extrem geringem Düsenverbrauch von zum Beispiel 1,2 I/h (geringster Bohrungsquerschnitt in der Brennerdüse). Bei großen Verbrauchern kann auf Einmalfilterung umgeschaltet werden, wodurch es zu einer geringeren Druckdifferenz kommt. Bei hohem Verbrauch wird keine optimale Filterfeinheit benötigt, da entsprechend große Düsenbohrungen verwendet werden. Bei Anlagen mit geringem Verbrauch, kann die maximal mögliche Filterfeinheit mit den am Markt befindlichen Filterelementen erreicht werden.

Vorzugsweise ist in der Rücklaufleitung ein Brennstoffentlüfter angeordnet und das Rücklaufumschaltventil in der Rücklaufleitung stromaufwärts des Brennstoffentlüfters angeordnet.

Bei einer bevorzugten Ausführungsform, die erfindungsgemäß auch in Alleinstellung vorgesehen sein kann, weist die Vorlaufleitung zwischen dem Tankanschluss und dem Brennstofffilter ein Rückschlagventil mit integrierter Druckentlastung auf. Dadurch werden gefährliche Überdrücke, wie sie zum Beispiel beim Falschanschluss der Filter- und Entlüftungsvorrichtung (Vor- und Rücklaufschlauch vertauscht angeschlossen) auftreten können.

Bei einer weiteren bevorzugten Ausführungsform ist vorgesehen, dass in der Rücklaufleitung ein Brennstoffentlüfter angeordnet ist, dass das Rücklaufumschaltventil in der Rücklaufleitung stromaufwärts des Brennstoffentlüfters angeordnet ist, und dass zwischen dem Brennstoffentlüfter und der Vorlaufleitung ein Bypassventil vorgesehen ist, durch welches der Brennstoffentlüfter mit der Vorlaufleitung verbindbar ist. Durch Öffnen des Bypassventils wird eine offene Verbindung von Rücklauf zur Vorlaufseite hergestellt, wodurch der Brennstoff entsprechend abfließen kann. Die Belüftung kann dabei über ein Entlüftungsventil des Brennstoffentlüfters erfolgen. Das Ablassen von Brennstoff wird zum Beispiel beim turnusmäßigen Wechsel der Brennerschläuche benötigt, wo bisher zwangsläufig immer flüssiger Brennstoff ausgetreten ist und zu entsprechenden Verschmutzungen und Geruchsbelästigungen geführt hat.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: die erfindungsgemäße Vorrichtung zum Filtern und Entlüften von Heizöl mit einem Rücklaufumschaltventil in der Ventilstellung für Einmalfilterung (Fig. 1a) und in der Ventilstellung für Mehrfachfilterung (Fig. 1 b);
- Fig. 2: eine Detailansicht eines in Fig. 1 gezeigten Rückschlagventils mit integrierter Druckentlastung; und
- Fign. 3a-3c: eine erfindungsgemäße Vorrichtung zum Filtern von Heizöl mit einem Rücklaufumschaltventil zum Umschalten zwischen Einmal- und Mehrfachfilterung in zwei Längsschnitten (Fign. 3a, 3b) entsprechend den Schnittlinien A-A, B-B in Fig. 3c.

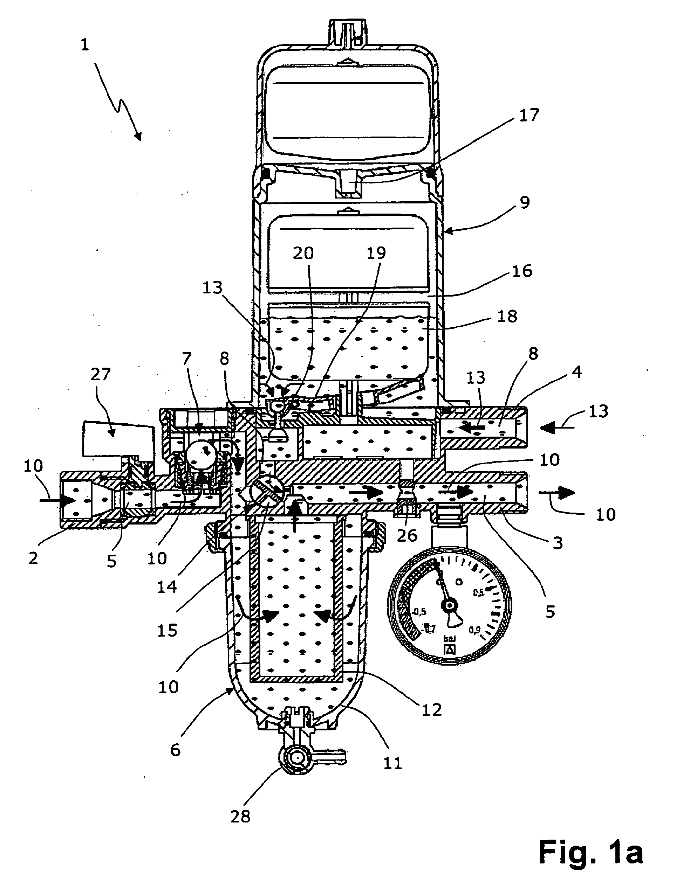

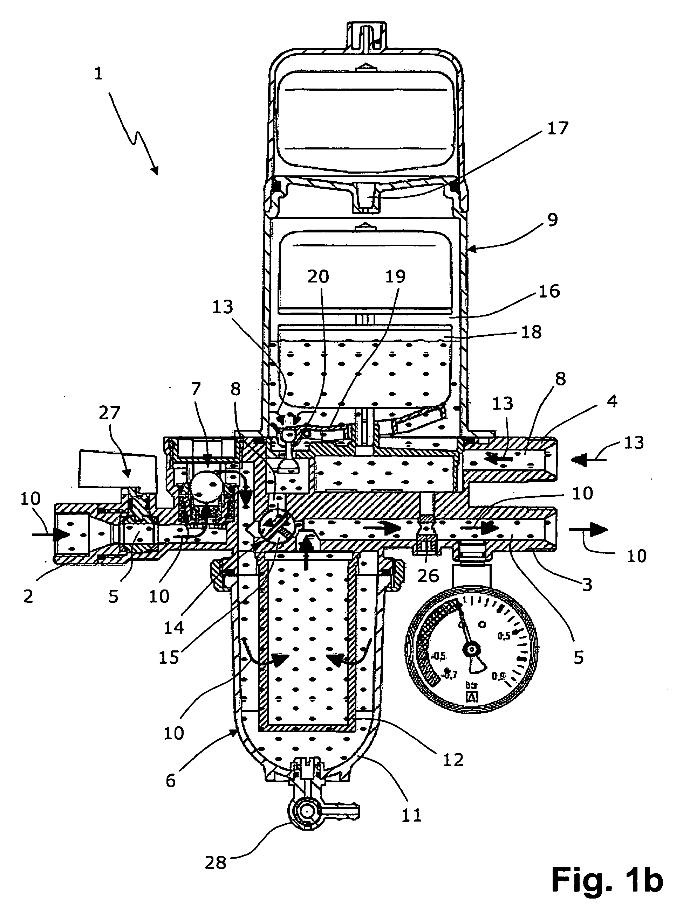

Die in **Fign. 1a** **und** **1b** gezeigte Vorrichtung **1** dient zum Filtern und Entlüften von Heizöl, das aus einem Öltank angesaugt und einem Ölbrenner zugeführt wird.

Die Filter- und Entlüftungsvorrichtung 1 weist einen Tankanschluss **2** zum Anschließen an den Öltank, einen Vorlaufanschluss **3** zum Anschließen an den zum Ölbrenner führenden Ölbrenner-Vorlauf, einen Rücklaufanschluss **4** zum Anschließen an einen vom Ölbrenner zurückführenden Ölbrenner-Rücklauf, eine den Tankanschluss 2 mit dem Vorlaufanschluss 3 verbindende Vorlaufleitung **5,** einen in der Vorlaufleitung 5 angeordneten Ölfilter **6,** ein in der Vorlaufleitung 5 zwischen dem Tankanschluss 2 und dem Ölfilter 6 angeordnetes Rückschlagventil **7** mit integrierter Druckentlastung, eine den Rücklaufanschluss 4 mit der Vorlaufleitung 5 verbindende Rücklaufleitung **8,** sowie einen in der Rücklaufleitung 8 angeordneten Ölentlüfter **9.**

Wie durch die Strömungspfeile **10** angedeutet, strömt das vom Öltank angesaugte Öl über den Tankanschluss 2 in die Vorlaufleitung 5 ein, passiert das Rückschlagventil 7 und gelangt dann in die Filtertasse **11** des Ölfilters 6. Das Öl durchströmt das in der Filtertasse 11 befindliche Filterelement **12** von außen nach innen, und das nun gefilterte Öl strömt weiter bis zum Vorlaufanschluss 3 und wird dem Ölbrenner zur Verbrennung zugeführt. Wie durch die Strömungspfeile **13** angedeutet, wird zu viel gefördertes, nicht der Verbrennung zugeführtes Öl vom Ölbrenner über den Rücklaufanschluss 4 in die Rücklaufleitung 8 und nach Durchlaufen des Ölentlüfters 9 erneut der Vorlaufleitung 5 über ein Rücklaufumschaltventil **14** zugeführt. Im Ölentlüfter 9 wird dem überschüssigen Rücklauföl darin befindliche gelöste Luft entzogen. Hierauf wird nachfolgend bei der Beschreibung und der Funktion des Ölentlüfters 9 noch näher eingegangen.

Das Rücklaufumschaltventil 14 ist in der Rücklaufleitung 8 stromaufwärts des Ölentlüfters 9 angeordnet und manuell zwischen zwei Ventilstellungen umschaltbar. Das Rücklaufumschaltventil 14 verbindet die Rücklaufleitung 8 in der einen, in Fig. 1a gezeigten Ventilstellung stromaufwärts des Ölfilters 6 mit der Vorlaufleitung 5 und in der anderen, in Fig. 1b gezeigten Ventilstellung stromabwärts des Ölfilters 6 mit der Vorlaufleitung 5. Das Rücklaufumschaltventil 14 weist einen zwischen den zwei Ventilstellungen um 90° verdrehbaren Ventilkörper **15** auf, der die Rücklaufleitung 8 entweder stromabwärts des Ölfilters 6 für eine Einmalfilterung des dem Ölbrenner zuzuführenden Öls oder stromaufwärts des Ölfilters 6 für eine Mehrfachfilterung des dem Ölbrenner zuzuführenden Öls mit der Vorlaufleitung 5 verbindet.

Die Mehrfachfilterung des rückgeführten Öls bedeutet eine wesentliche Verbesserung des Ölfilters 6 insbesondere bei geringem Brennerstoffverbrauch, also kleinen Durchflüssen von kleiner als ca. 20 l/h. Durch diese Mehrfachfilterung verbessert sich zum Beispiel die Filterfeinheit eines 5/20 µm-Filterelementes 12 (5 µm bei 50% Fraktionsabscheidegrad / 20 µm bei 99% Fraktionsabscheidegrad) von 20 µm auf 5 µm. Dadurch wird bei kleinen Verbrauchern eine optimale Filterung erreicht. Dies ist wichtig für den störungsfreien Betrieb bei Kleinstverbraucher mit extrem geringem Düsenverbrauch von zum Beispiel 1,2 l/h (geringster Bohrungsquerschnitt in der Ölbrennerdüse). Aufgrund der Mehrfachfilterung kommt es außerdem am Filterelement 12 zu einer größeren Druckdifferenz, wodurch mehr Luft zusammen mit dem Öl durch das Filterelement 12 hindurchströmt. Im Vergleich zu einer Einmalfilterung treten vor allem bei kleinen Volumenströmen keine bzw. wesentlich geringere Luftansammlungen in der Filtertasse 11 auf.

Bei großen Verbrauchern, insbesondere mit Durchflüssen von größer 20 l/h, kann auf die Einmalfilterung umgeschaltet werden, wodurch es am Filterelement 12 nur zu einer kleineren Druckdifferenz kommt. Der hohe Durchfluss verhindert jedoch größere Luftansammlungen in der Filtertasse 11. Bei hohem Verbrauch wird keine optimale Filterfeinheit benötigt, da entsprechend große Düsenbohrungen verwendet werden. Durch das Rücklaufumschaltventil 14 lässt sich der Ölfilter 6 somit wahlweise auf größere bzw. kleinere Durchflüsse einstellen.

Das rückgeführte Öl tritt in eine Schwimmerkammer **16** des Ölentlüfters 9 ein, in der unter allmählichem Anstieg des Ölpegels die Entlüftung durch ein Entlüftungsventil **17** erfolgt. Bei einem Ölpegel von ca. 20-30 mm über dem Schwimmerkammerboden beginnt ein in der Schwimmerkammer 16 vorgesehener Betriebsschwimmer **18** auf dem Öl aufzutreiben und über einen Hebelmechanismus **19** ein Ventil **20** aufzusteuern, welches das entlüftete Rücklauföl wieder der Vorlaufleitung 5 zuführt. Der zum Ölbrenner fließende Volumenstrom besteht zum größten Teil aus entlüftetem Heizöl und in kleineren Teilen aus Öl vom Öltank, das noch Luftanteile enthalten kann.

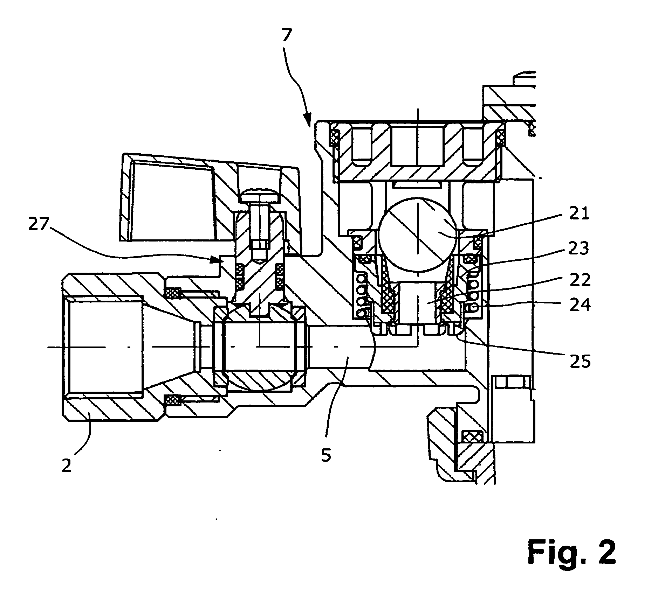

Wie in **Fig. 2** im Detail gezeigt, ist das Rückschlagventil 7 als Kugelrückschlagventil ausgebildet, dessen Kugel **21** mit einer Öffnung **22** eines verschiebbar geführten Ventilkörpers **23** zusammenwirkt. Bei geschlossenem Kugelrückschlagventil 7 wird bei einem auf die Kugel 21 in Rückflussrichtung wirkenden, zu hohen Überdruck der Ventilkörper 23 durch die Kugel 21 aus seiner in Fig. 2 gezeigten Schließstellung gegen die Wirkung einer Rückstellfeder **24** in Rückflussrichtung, also in Fig. 2 nach unten, verschoben und dadurch eine Bypassöffnung **25** freigegeben. Das Rückschlagventil 7 mit integrierter Druckentlastung verhindert somit gefährliche Überdrücke in der Vorlaufleitung 5, wie sie zum Beispiel beim Falschanschluss der Filter- und Entlüftungsvorrichtung 1 (Vor- und Rücklaufschlauch vertauscht angeschlossen) auftreten und den Ölentlüfter 9 zum Bersten bringen können.

Zwischen dem Ölentlüfter 9 und der Vorlaufleitung 5 ist ein manuell betätigbares Bypassventil **26** vorgesehen, durch welches die Schwimmerkammer 16 des Ölentlüfters 9 mit der Vorlaufleitung 5 verbindbar ist. Das Bypassventil 26 bildet eine integrierte Entleereinrichtung, mit welcher der Ölentlüfter 9 im Servicefall vollständig bzw. fast vollständig entleert werden kann. Bei geschlossenem Absperrventil **27** des Tankanschlusses 2 werden vom Bediener das Entleerventil **28** an der Filtertasse 11 sowie das Bypassventil 26 geöffnet, so dass das gesamte in der Filter- und Entlüftungsvorrichtung 1 befindliche Öl über das Entleerventil 28 abgelassen werden kann. Durch Öffnen des Bypassventils 26 wird eine offene Verbindung von Rücklauf zur Vorlaufseite hergestellt, wodurch das dort befindliche Öl entsprechend abfließen kann. Die Belüftung erfolgt dabei über das Entlüftungsventil 17 der Schwimmerkammer 16. Das Ablassen des Öls ist zum Beispiel beim turnusmäßigen Wechsel der Brennerschläuche erforderlich, wo bisher zwangsläufig immer Öl ausgetreten ist und entsprechende Verschmutzungen und Geruchsbelästigungen aufgetreten sind.

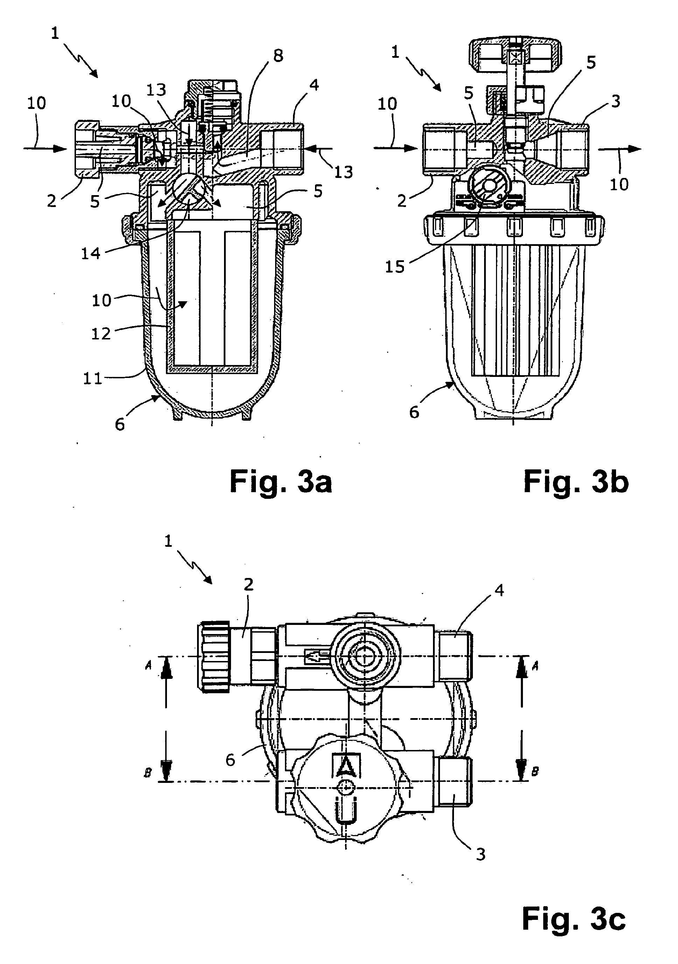

Von der Filter- und Entlüftungsvorrichtung von Fig. 1 unterscheidet sich die in **Fig. 3** gezeigte Vorrichtung 1 dadurch, dass hier kein Ölentlüfter vorhanden ist und die Umschaltung zwischen Einfach- und Mehrfachfilterung also bei dem Ölfilter 6 mit Rücklaufanschluss 4 erfolgt. In Fig. 3 sind funktionsgleiche Teile mit denselben Bezugsziffern wie in Fig. 1 bezeichnet.

Wie durch die Strömungspfeile 10 angedeutet, strömt das vom Öltank angesaugte Öl über den Tankanschluss 2 in die Vorlaufleitung 5 ein und gelangt dann in die Filtertasse 11 des Ölfilters 6. Das Öl durchströmt das in der Filtertasse 11 befindliche Filterelement 12 von außen nach innen, und das nun gefilterte Öl strömt weiter bis zum Vorlaufanschluss 3 und wird dem Ölbrenner zur Verbrennung zugeführt.

Wie durch die Strömungspfeile 13 angedeutet, wird zu viel gefördertes, nicht der Verbrennung zugeführtes Öl vom Ölbrenner über den Rücklaufanschluss 4 in die Rücklaufleitung 8 und erneut der Vorlaufleitung 5 über das Rücklaufumschaltventil 14 zugeführt. Das Rücklaufumschaltventil 14 verbindet die Rücklaufleitung 8 in der einen, in Fig. 3a gezeigten Ventilstellung stromaufwärts des Ölfilters 6 mit der Vorlaufleitung 5 für eine Einfachfachfilterung und in der anderen, nicht gezeigten Ventilstellung stromabwärts des Ölfilters 6 mit der Vorlaufleitung 5 für eine Mehrfachfilterung.

## Patentansprüche

1. Vorrichtung (1) zum Filtern von flüssigem Brennstoff, insbesondere von Heizöl, aufweisend:
einen Tankanschluss (2) zum Anschließen an einen Brennstofftank,
einen Vorlaufanschluss (3) zum Anschließen an einen Brenner-Vorlauf,
einen Rücklaufanschluss (4) zum Anschließen an einen Brenner-Rücklauf,
eine den Tankanschluss (2) mit dem Vorlaufanschluss (3) verbindende Vorlaufleitung (5),
einen in der Vorlaufleitung (5) angeordneten Brennstofffilter (6), und
eine den Rücklaufanschluss (4) mit der Vorlaufleitung (5) verbindende Rücklaufleitung (8),
**dadurch gekennzeichnet,**
**dass** die Rücklaufleitung (8) an die Vorlaufleitung (5) durch ein zwischen zwei Ventilstellungen schaltbares Rücklaufumschaltventil (14) angeschlossen ist, welches die Rücklaufleitung (8) in der einen Ventilstellung stromaufwärts des Brennstofffilters (6) und in der anderen Ventilstellung stromabwärts des Brennstofffilters (6) mit der Vorlaufleitung (5) verbindet.

2. Filtervorrichtung nach Anspruch 1, **dadurch gekennzeichnet, dass** in der Rücklaufleitung (8) ein Brennstoffentlüfter (9) angeordnet ist und dass das Rücklaufumschaltventil (14) in der Rücklaufleitung (8) stromaufwärts des Brennstoffentlüfters (9) angeordnet ist.

3. Filtervorrichtung nach Anspruch 1 oder 2, **dadurch gekennzeichnet, dass** das Rücklaufumschaltventil (14) als 3/2-Wege-Ventil ausgebildet ist.

4. Filtervorrichtung nach einem der vorhergehenden Ansprüche, **dadurch gekennzeichnet, dass** das Rücklaufumschaltventil (14) manuell betätigbar ist.

5. Filtervorrichtung nach einem der vorhergehenden Ansprüche, **dadurch gekennzeichnet, dass** das Rücklaufumschaltventil (14) einen zwischen den zwei Ventilstellungen verdrehbaren Ventilkörper (15) aufweist.

6. Filtervorrichtung nach einem der vorhergehenden Ansprüche oder nach dem Oberbegriff von Anspruch 1, **dadurch gekennzeichnet, dass** die Vorlaufleitung (5) zwischen dem Tankanschluss (2) und dem Brennstofffilter (6) ein Rückschlagventil (7) mit integrierter Druckentlastung aufweist.

7. Filtervorrichtung nach Anspruch 6, **dadurch gekennzeichnet, dass** das Rückschlagventil (7) als Kugelrückschlagventil ausgebildet, dessen Kugel (21) mit einer Öffnung (22) eines verschiebbar geführten Ventilkörpers (23) zusammenwirkt, der bei einem auf die Kugel (21) in Rückflussrichtung wirkenden Überdruck durch die Kugel (21) aus seiner Schließstellung gegen die Wirkung einer Rückstellfeder (24) in Rückflussrichtung verschoben wird und dadurch eine Bypassöffnung (25) freigibt.

8. Filtervorrichtung nach einem der vorhergehenden Ansprüche, **dadurch gekennzeichnet, dass** in der Rücklaufleitung (8) ein Brennstoffentlüfter (9) angeordnet ist, dass das Rücklaufumschaltventil (14) in der Rücklaufleitung (8) stromaufwärts des Brennstoffentlüfters (9) angeordnet ist, und dass zwischen dem Brennstoffentlüfter (9) und der Vorlaufleitung (5) ein Bypassventil (26) vorgesehen ist, durch welches der Brennstoffentlüfter (9) mit der Vorlaufleitung (5) verbindbar ist.

## Claims

1. Device (1) for filtering liquid fuel, in particular fuel oil, comprising:
a tank connection (2) for connection to a fuel tank,
a feed connection (3) for connection to a burner fuel feed,
a return connection (4) for connection to a burner fuel return,
a feed line (5) connecting the tank connection (2) to the feed connection (3),
a fuel filter (6) disposed in the feed line (5), and
a return line (8) connecting the return connection (4) to the feed line (5),
**characterized in that**
the return line (8) is connected to the feed line (5) by means of a return changeover valve (14) that can be switched between two valve positions and
connects the return line (8) to the feed line (5) upstream of the fuel filter (6) in one of the valve positions and connects the return line (8) to the feed line (5) downstream of the fuel filter (6) in the other valve position.

2. Filtering device according to claim 1, **characterized in that** a fuel deaeration device (9) is arranged in the return line (8) and the return changeover valve (14) is disposed in the return line (8) upstream of the fuel deaeration device (9).

3. Filtering device according to claim 1 or 2, **characterized in that** the return changeover valve (14) is designed as a 3/2-way valve.

4. Filtering device according to any one of the preceding claims, **characterized in that** the return changeover valve (14) can be manually operated.

5. Filtering device according to any one of the preceding claims, **characterized in that** the return changeover valve (14) has a valve body (15) that can be rotated between the two valve positions.

6. Filtering device according to any one of the preceding claims or according to the pre-characterizing part of claim 1, **characterized in that** the feed line (5) has a check valve (7) with integrated pressure relief between the tank connection (2) and the fuel filter (6).

7. Filtering device according to claim 6, **characterized in that** the check valve (7) is in the form of a ball check valve, the ball (21) of which cooperates with an opening (22) of a slidably guided valve body (23), which, in case an excess pressure acts on the ball (21) in the return direction, is displaced by the ball (21) from its closed position in the return direction against the action of a restoring spring (24) and thereby opens a bypass opening (25).

8. Filtering device according to any one of the preceding claims, **characterized in that** a fuel deaeration device (9) is arranged in the return line (8), the return changeover valve (14) is disposed in the return line (8) upstream of the fuel deaeration device (9) and a bypass valve (26) is provided between the fuel deaeration device (9) and the feed line (5), through which bypass valve (26) the fuel deaeration device (9) can be connected to the feed line (5).

## Revendications

1. Dispositif (1) de filtration de combustible liquide, en particulier de fioul, présentant :
un branchement de réservoir (2) pour le raccordement à un réservoir de combustible,
un branchement aller (3) pour le raccordement à une alimentation de brûleur,
un branchement de retour (4) pour le raccordement à un retour de brûleur,
une conduite aller (5) reliant le branchement de réservoir (2) au branchement aller (3),
un filtre à combustible (6) disposé dans la conduite aller (5), et
une conduite de retour (8) reliant le branchement de retour (4) à la conduite aller (5),
**caractérisé en ce que** la conduite de retour (8) est raccordée à la conduite aller (5) par un distributeur de commutation de retour (14) qui peut être commuté entre deux positions de distributeur et qui relie la conduite de retour (8) à la conduite aller (5) en amont du filtre à combustible (6) dans l'une des positions de distributeur et en aval du filtre à combustible (6) dans l'autre position de distributeur.

2. Dispositif de filtration selon la revendication 1, **caractérisé en ce qu'**un purgeur d'air (9) est disposé dans la conduite de retour (8) pour purger le combustible, et **en ce que** le distributeur de commutation de retour (14) est disposé dans la conduite de retour (8) en amont du purgeur d'air (9).

3. Dispositif de filtration selon la revendication 1 ou 2, **caractérisé en ce que** le distributeur de commutation de retour (14) est réalisé sous forme de distributeur 3/2 voies.

4. Dispositif de filtration selon l'une des revendications précédentes, **caractérisé en ce que** le distributeur de commutation de retour (14) peut être actionné manuellement.

5. Dispositif de filtration selon l'une des revendications précédentes, **caractérisé en ce que** le distributeur de commutation de retour (14) présente un corps de distributeur (15) pouvant être déplacé par rotation entre les deux positions de distributeur.

6. Dispositif de filtration selon l'une des revendications précédentes ou selon le préambule de revendication 1, **caractérisé en ce que** la conduite aller (5) présente, entre le branchement de réservoir (2) et le filtre à combustible (6), un clapet anti-retour (7) avec détente de pression intégrée.

7. Dispositif de filtration selon la revendication 6, **caractérisé en ce que** le clapet anti-retour (7) est réalisé sous forme de clapet anti-retour à bille, dont la bille (21) coopère avec une ouverture (22) d'un corps de clapet (23) guidé en translation, corps qui, lors d'une surpression agissant dans la direction de reflux sur la bille (21), est déplacé par la bille (21) depuis sa position fermée dans la direction de reflux à l'encontre de l'action d'un ressort de rappel (24) et libère ainsi une ouverture de bypass (25).

8. Dispositif de filtration selon l'une des revendications précédentes, **caractérisé en ce qu'**un purgeur d'air (9) est disposé dans la conduite de retour (8) pour purger le combustible, **en ce que** le distributeur de commutation de retour (14) est disposé dans la conduite de retour (8) en amont du purgeur d'air (9), et **en ce qu'**une vanne de bypass (26), par laquelle le purgeur d'air (9) peut être relié à la conduite aller (5), est prévue entre le purgeur d'air (9) et la conduite aller (5).
